**Europäisches Patentamt**

(19) **European Patent Office**

**Office européen des brevets**

(11) Numéro de publication: **0 141 700**
**B1**

(12) **FASCICULE DE BREVET EUROPEEN**

(45) Date de publication du fascicule du brevet: **18.01.89**

(51) Int. Cl.⁴: **B 29 C 33/02**

(21) Numéro de dépôt: **84401811.9**

(22) Date de dépôt: **13.09.84**

(54) **Moule pour réaliser des pièces moulées de grandes dimensions en matériau composite.**

(30) Priorité: **19.09.83 FR 8314838**

(43) Date de publication de la demande:
**15.05.85 Bulletin 85/20**

(45) Mention de la délivrance du brevet:
**18.01.89 Bulletin 89/03**

(84) Etats contractants désignés:
**BE CH DE GB IT LI SE**

(56) Documents cités:
**DE-A-2 043 982**
**DE-C- 816 897**
**FR-A-2 110 467**
**FR-A-2 159 231**
**GB-A-2 105 251**

(73) Titulaire: **AEROSPATIALE SOCIETE NATIONALE INDUSTRIELLE**
**37, Boulevard de Montmorency**
**F-75781 Paris Cédex 16 (FR)**

(72) Inventeur: **Michaud-Soret, Jean Alain**
**21 Villa Daviel**
**F-75013 Paris (FR)**

(74) Mandataire: **Barnay, André François**
**Cabinet Barnay 80 rue Saint-Lazare**
**F-75009 Paris (FR)**

Courier Press, Leamington Spa, England.

## Description

La présente invention concerne d'une façon générale la fabrication des pièces moulées de grandes dimensions et elle est plus particulièrement relative à un moule économique pour articles de grandes dimensions en matériau composite polymérisable par application de chaleur et de pression.

Les matériaux composites à base de résines et de fibres se sont considérablement développés dans de nombreuses applications en raison de leurs qualités inhérentes: résistance, stabilité, insensibilité à la corrosion et autres propriétés bien connues parmi lesquelles notamment la facilité de fabrication par moulage et polymérisation sous chaleur et pression.

Cependant, la fabrication d'articles de grandes dimensions en résine armée de fibres n'a été possible jusqu'à présent que par des procédés manuels dans lesquels un ou plusieurs opérateurs déposent des couches, par exemple de tissu de verre, en les imprégnant au fur et à mesure avec des couches de résine, sur une forme, la polymérisation étant obtenue uniquement par l'adjonction de catalyseur à la résine, en raison du fait que l'application uniforme de pression et de chaleur est extrêmement difficile sur des pièces de grandes dimensions. Ce procédé est long et présente en outre les inconvénients de la polymérisation par réaction exothermique.

Pour réaliser des pièces en résine armée, polymérisées par application de chaleur et de pression, on doit utiliser des moules rigides comportant des canaux pour assurer la circulation d'un agent de chauffage.

De tels moules sont extrêmement coûteux à réaliser et principalement les frais entraînés par cette fabrication ont jusqu'à présent rendu impossible la fabrication d'articles de grandes dimensions, par exemple des poutres en matériau composite polymérisé par application de chaleur et de pression, bien que les qualités de ces matériaux soient particulièrement intéressantes dans cette application, ainsi que dans de nombreuses autres.

On connaît également par DE-A-2.043.982 un moule spécifiquement conçu pour le moulage par injection ou par soufflage mais non pas pour le moulage des pièces de grandes longueurs, telles que des poutres, ce moule comprenant deux coquilles auto-porteuses formées de feuilles de métal mince remplies d'un matériau de support qui est une mousse dure d'une matière synthétique, des conduits séparés étant prévus entre lesdites feuilles de métal et le matériau de support en divers points de l'empreinte de moulage.

Un tel moule est adapté pour supporter les pressions élevées utilisées dans le moulage par injection, ou celles utilisées dans le moulage par soufflage, mais non pas pour la réalisation de pièces de grandes longueurs en matière composite fibres-résine, qui nécessite entre autres un chauffage uniforme des surfaces de l'empreinte sans application de pressions notables.

GB-A-2.105.251, ayant servi ou base pour le preambule ou la revendication 1, decrit un procédé de fabrication d'un moule, suivant lequel on dépose une première couche de béton sur une forme de la pièce à mouler, on enfonce des éléments chauffants dans le béton non durci, on dépose une seconde couche de béton par-dessus lesdits éléments, on fixe l'ensemble sur un support en béton thermiquement isolant et on revêt la surface de moulage (comportant les éléments chauffants) avec une couche de céramique ou une tôle mince.

Dans un tel moule les éléments chauffants doivent tout d'abord chauffer la masse de béton ordinaire dans laquelle ils sont noyés, le support étant en un béton isolant. En outre, ce procédé nécessite au moins six phases opératoires.

L'invention a pour but de remédier aux inconvénients des moules connus en fournissant un moule pour la réalisation d'articles de grandes dimensions en résine armée, par moulage sous chaleur et pression.

L'invention a pour objet à cet effet un moule pour la fabrication de pièces moulées de grandes dimensions et en particulier de grande longueur en matière composite fibres-résine thermodurcissable, du type comprenant un support en béton et une masse également en béton comportant une empreinte de la pièce à mouler, des organes chauffants à résistance électrique et une mince couche en tôle s'étendant sur la totalité de ladite empreinte, caractérisé en ce que ladite masse en béton est en béton isolant allégé thermiquement comportant une charge de billes de verre cellulaire et de microsphères ayant une densité de 0,3 à 0,7, lesdits éléments chauffants étant disposés sur la surface de ladite empreinte entre celle-ci et ladite tôle mince.

On comprend que l'isolant thermique formant barrière, la chaleur engendrée par les moyens chauffants est entièrement appliquée au matériau composite disposé dans l'empreinte du moule à travers la paroi conductible de celui-ci; cette chaleur agissant en conjugaison avec la pression appliquée aux formes-supports, permet d'obtenir la polymérisation désirée du matériau.

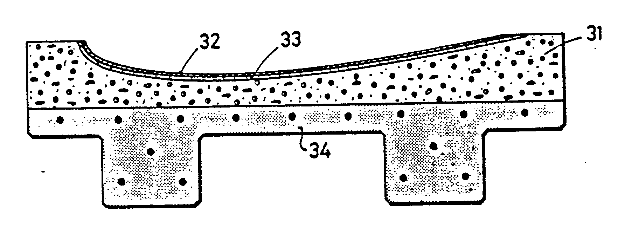

La description qui va suivre, en regard du dessin annexé à titre d'exemple non limitatif, permettra de bien comprendre comment la présente invention peut être mise en pratique.

La figure unique est une vue en section d'une partie d'un moule suivant l'invention.

D'une façon générale les moules utilisés pour la fabrication de pièces par moulage comportent deux demicoquilles qui sont dans leur ensemble identiques; on a décrit et représenté seulement la coquille ou moitié inférieure d'un élément de moule suivant l'invention.

On a représenté à la figure une partie d'un moule réalisé suivant l'invention. Dans cet exemple, la forme—support est constituée par une masse 31 de béton allégé chargé de billes de verre cellulaire et de microsphères de verre ayant une densité comprise entre 0,3 et 0,7, qui confèrent à ce béton des propriétés thermiquement isolantes élevées tout en lui laissant la rigidité nécessaire pour transmettre uniformément la pression sur la tôle mince 32 constituant la paroi de l'empreinte. La masse de béton allégé 31 peut être facilement mise à la forme voulue pour constituer la forme-support et après sa prise peut transmettre uniformément la pression à la tôle mince 32 tout en constituant une barrière thermique appropriée pour la chaleur dégagée par les éléments chauffants 33. La masse 31 de béton cellulaire est avantageusement soutenue par un support 34 en béton armé. Un tel moule assure une très grande fiabilité des fabrications de pièces structurales de grandes dimensions car un tel béton allégé ne présente aucun interstice ou bulle.

Chaque élément chauffant 33 comprend comme connu en soi un élément de résistance électrique constitué par exemple par un ruban de métal disposé suivant un trajet continu sinueux entre deux feuilles d'une matière fibreuse, par exemple en tissu de verre, qui sont collées au moyen d'une résine synthétique polymérisée.

Le principe de ces éléments chauffants est connu. Ils peuvent être fabriqués de façon rapide et économique en toutes dimensions et avec des valeurs de résistance connues, en particulier à l'aide de feuilles d'une matière synthétique appropriée sur lesquelles sont disposés des rubans adhésifs au plomb.

Ces éléments, ou "résistances", présentent l'avantage d'une très grande surface d'échange thermique; ils sont alimentés sous une tension appropriée et leur température est régulée.

Bien entendu, dans l'exemple décrit plus haut on utilise de façon connue en soi un agent de démoulage approprié pour éviter toute adhérence du matériau composite sur la paroi de l'empreinte.

On comprend que l'invention permet de réaliser de façon économique des moules pour la réalisation de pièces en matériau composite de grandes dimensions en plusieurs éléments pouvant être facilement adaptés les uns à la suite des autres et sur lesquels il est possible d'appliquer des organes de transmission de pression, tandis que les éléments chauffants transmettent leur chaleur directement à travers la paroi conductible de l'empreinte de moulage et que les éléments de chauffage incorporés dans la matière de la pièce moulée assurent un chauffage uniforme du produit composite pour assurer sa polymérisation.

On remarquera enfin que les moules réalisés suivant l'invention en conjugaison avec le demi-produit tel que décrit dans le brevet FR 2.514.695 de la demanderesse, non polymérisé ou partiellement polymérisé, permettent la réalisation jusqu'alors impossible de pièces de grandes et même de très grandes dimensions, le demi-produit précité permettant un gain de temps extrêmement important lors de la disposition des différentes couches du produit composite dans les empreintes de moulage.

## Revendications

1. Moule pour la fabrication de pièces moulées de grandes dimensions et en particulier de grande longueur en matière composite fibres-résine thermodurcissable, du type comprenant un support (34) en béton et une masse (31) également en béton comportant une empreinte de la pièce à mouler, des organes chauffants (33) à résistance électrique et une mince couche en tôle (32) s'étendant sur la totalité de ladite empreinte, caractérisé en ce que ladite masse en béton (31) est en béton isolant allégé thermiquement comportant une charge de billes de verre cellulaire et de microsphères ayant une densité de 0,3 à 0,7, lesdits éléments chauffants (33) étant disposés sur la surface de ladite empreinte entre celle-ci et ladite tôle mince (32).

2. Moule suivant la revendication 1, caractérisé en ce que lesdits éléments chauffants électriques à résistance (33) sont constitués par de minces bandes adhésives de plomb disposées suivant un trajet sinueux continu entre deux feuilles d'une matière fibreuse et qui sont collées au moyen d'une résine synthétique polymérisée.

3. Moule suivant la revendication 2, caractérisé en ce que lesdits éléments chauffants (33) sont disposés en relation d'échange thermique direct avec ladite surface de ladite masse (31) et avec ladite mince couche de tôle (32) de façon amovible.

## Patentansprüche

1. Form zur Herstellung großer und insbesondere langer Formteile aus Verbundmaterial aus einem duroplastischen faserverstärkten Harz, mit einem Untergestell (34) aus Beton und einem ebenfalls aus Beton bestehenden Körper (31), die mit einem Abdruck des zu formenden Teils versehen ist, ferner mit einer elektrischen Widerstands-Heizeinrichtung (33) und einer dünnen Blechauflage (32), die sich über den gesamten Abdruck erstreckt, dadurch gekennzeichnet, daß der Betonkörper (31) aus thermisch isolierendem Leichtbeton besteht, der einen Füllstoff aus geschlossenzelligen Glaskugeln und Mikrokugeln mit einer Dichte zwischen 0,3 und 0,7 enthält, wobei die Heizeinrichtung (33) an der Oberfläche des Abdrucks zwischen diesem und der dünnen Blechauflage (32) angeordnet ist.

2. Form nach Anspruch 1, dadurch gekennzeichnet, daß die elektrischen Widerstands-Heizelemente (33) von dünnen haftenden Bändern aus Blei gebildet sind, die längs einer durchgehenden sinusförmigen Bahn zwischen zwei Folien aus Fibermaterial angeordnet und mittels eines polymerisierten Kunstharzes verklebt sind.

3. Form nach Anspruch 2, dadurch gekennzeichnet, daß die Heizelemente (33) bezüglich des thermischen Austauschs mit der Oberfläche des Körpers (31) sowie der dünnen Blechauflage (32) lösbar angeordnet sind.

## Claims

1. A mould for the production of large mouldings and, in particular mouldings of great length, from thermosetting fibre-resin composite material, of the type comprising a concrete support (34) and a body (31), also made of concrete, incorporating an impression of the article to be moulded, electrical resistance heating elements (33) and a thin layer of sheeting (32) extending over the whole of said impression, characterised in that said concrete body (31) is composed of thermally insulating light-weight concrete containing a filling of cellular glass balls and microspheres having a density of from 0.3 to 0.7, said heating elements (33) being provided on the surface of said impression between the latter and said thin sheeting (32).

2. A mould according to claim 1, characterised in that said electrical resistance heating elements (33) comprise thin adhesive strips of lead arranged in a continuous winding path between two sheets of a fibrous material and which are stuck by means of a polymerised synthetic resin.

3. A mould according to claim 2, characterised in that said electrical resistance heating elements (33) are disposed in direct thermal exchange relationship with the surface of said body (31) and with said thin layer of sheeting (32) in a detachable way.